# DEMANDE DE BREVET EUROPEEN

(11) **EP 4 397 537 A1**
(43) Date de publication de la demande: **10.07.2024**
(21) Numéro de dépôt: 23307095.2
(22) Date de dépôt: 30.11.2023
(51) Int. Cl.: B60N 2/68, B60N 2/70

(54) **ENSEMBLE POUR UN PREMIER DOSSIER ET UN DEUXIÈME DOSSIER DE SIÈGE DE VÉHICULE**

(30) Priorité: 04.01.2023 FR 2300090
(71) Demandeur: FAURECIA Sièges d'Automobile, 92000 Nanterre (FR)
(72) Inventeur: REITH, Carsten, 31712 NIEDERNWÖHREN (DE); PHARATE, Abhijeet, 411027 PUNE (IN); MICHAUD, Marine, 75006 PARIS (FR)
(74) Mandataire: Plasseraud IP

(57) **Abrégé**

Ensemble pour un premier dossier (102) et un deuxième dossier (202), l'ensemble comprenant un premier système de suspension (150) destiné à être fixé à une première armature (190) et un deuxième système de suspension (250) destiné à être fixé à une deuxième armature (290), dans lequel :
ledit premier système de suspension (150) comporte un premier support principal (110), un premier support annexe (120) et une première âme structurelle (140) à laquelle sont fixés le premier support principal (110) et le premier support annexe (120),
ledit deuxième système de suspension (250) comporte un deuxième support principal (210), un deuxième support annexe (220), et une deuxième âme structurelle (240) à laquelle sont fixés le deuxième support principal (210) et le deuxième support annexe (220),
le deuxième support principal (210) est géométriquement identique au premier support principal (110), et le deuxième support annexe (220) diffère géométriquement du premier support annexe (120).

## Description

### Domaine technique

La présente description est relative à un ensemble pour dossier de siège de véhicule, notamment de véhicule automobile.

### Etat de la technique

Dans le domaine automobile, il est connu un dossier de siège de véhicule comprenant une armature de dossier, au moins un module central de garniture et deux modules latéraux de garniture disposés chacun d'un côté respectif du module central de garniture, chacun des au moins trois modules de garniture pouvant être fixé à l'armature de dossier indépendamment des deux autres modules de garniture.

Un tel dossier de siège est notamment décrit dans le document FR 3 117 068 A1. Ainsi, la garniture d'un tel dossier peut facilement et rapidement être montée sur l'armature de dossier. En outre, un module peut aisément être remplacé.

Mais, avec un tel dossier, il est difficile de relier les modules de garniture les uns aux autres en l'absence de dossier sans compliquer le remplacement d'un module et/ou l'assemblage du siège. Or, l'armature de dossier étant généralement métallique et les modules de garnitures étant généralement en plastique ou textile, l'armature de dossier et les modules de garniture sont réalisés suivant des techniques de fabrication distinctes. Par conséquent, l'armature de dossier et les modules de garniture sont généralement réalisés sur des sites distants. Il peut donc être nécessaire de transporter de nombreux éléments différents pour réaliser un siège.

### Exposé de la description

Pour remédier aux problèmes précités, il est proposé selon la présente description un ensemble pour un premier dossier et un deuxième dossier de siège de véhicule, l'ensemble comprenant un premier système de suspension destiné à être fixé à une première armature (de dossier) et un deuxième système de suspension destiné à être fixé à une deuxième armature (de dossier), dans lequel :
ledit premier système de suspension comporte :
   - un premier support principal, le premier support principal présente une première plaque principale, ladite première plaque principale s'étend suivant une première direction d'élévation entre un premier bord principal supérieur et un premier bord principal inférieur, ladite première plaque principale s'étend suivant une première direction transversale entre un premier bord principal de premier côté et un premier bord principal de deuxième côté, la première direction transversale est perpendiculaire à la première direction d'élévation,
   - un premier support annexe, le premier support annexe présente une première plaque annexe, ladite première plaque annexe présente une première portion centrale s'étendant dans le prolongement de la première plaque principale suivant la première direction d'élévation, ladite première portion centrale s'étend suivant la première direction d'élévation entre un premier bord central supérieur et un premier bord central inférieur, le premier bord central inférieur s'étend en regard du premier bord principal supérieur, et
   - une première âme structurelle s'étendant suivant la première direction d'élévation, le premier support principal est fixé à la première âme structurelle et le premier support annexe est fixé à la première âme structurelle,
ledit deuxième système de suspension comporte :
   - un deuxième support principal, le deuxième support principal présente une deuxième plaque principale, ladite deuxième plaque principale s'étend suivant une deuxième direction d'élévation entre un deuxième bord principal supérieur et un deuxième bord principal inférieur, ladite deuxième plaque principale s'étend suivant une deuxième direction transversale entre un deuxième bord principal de premier côté et un deuxième bord principal de deuxième côté, la deuxième direction transversale est perpendiculaire à la deuxième direction d'élévation,
   - un deuxième support annexe, le deuxième support annexe présente une deuxième plaque annexe, ladite deuxième plaque annexe présente une deuxième portion centrale s'étendant dans le prolongement de la deuxième plaque principale suivant la deuxième direction d'élévation, ladite deuxième portion centrale s'étend suivant la deuxième direction d'élévation entre un deuxième bord central supérieur et un deuxième bord central inférieur, le deuxième bord central inférieur s'étend en regard du deuxième bord principal supérieur, et
   - une deuxième âme structurelle s'étendant suivant la deuxième direction d'élévation, le deuxième support principal est fixé à la deuxième âme structurelle et le deuxième support annexe est fixé à la deuxième âme structurelle,
dans lequel ensemble :
   - le deuxième support principal est géométriquement identique au premier support principal, et
   - le deuxième support annexe diffère géométriquement du premier support annexe.

Ainsi, l'âme structurelle remplit une fonction de suspension. De multiples modèles de siège différents peuvent être réalisés, le support principal de ces modèles de siège ayant été réalisés dans le même moule ou du moins dans des moules ayant des cavités de moulage de dimensions identiques aux tolérances de fabrication près. Par conséquent, des économies peuvent être réalisées dans la conception, la réalisation du moule, la fabrication des supports principaux et la gestion des éléments constituant le dossier.

Compte tenu des tolérances de fabrication, un deuxième support principal sera considéré géométriquement identique au premier support principal si chacune de ses dimensions diffère de celles du premier support de moins de 1%.

A toute fin utile, il est précisé que, conformément à la définition usuelle, on entend par "plaque" une pièce plate, peu épaisse et rigide. Par conséquent, des éléments gonflables ne sont pas considérés comme formant une plaque. Le premier dossier et/ou le deuxième dossier peut toutefois comprendre en outre un (des) élément(s) gonflable(s).

Selon une caractéristique complémentaire conforme à la présente description, le deuxième support principal est de préférence techniquement identique au premier support principal.

Ainsi, non seulement le deuxième support principal est identique géométriquement au premier support principal, mais en outre le premier support principal et le deuxième support principal sont réalisés dans le même matériau. Le deuxième support principal peut ne pas être totalement identique au premier support principal, des différences esthétiques pouvant exister, par exemple une différence de couleur due à des colorants différents ou l'apposition d'une date de fabrication ou analogue.

Compte tenu des tolérances de fabrication, un deuxième support principal géométriquement identique au premier support principal sera considéré techniquement identique au premier support principal si les teneurs des éléments constituant le matériau du deuxième support principal diffèrent de moins de 1% en poids des éléments constituant le matériau du premier support principal.

Selon une autre caractéristique conforme à la présente description, de préférence la première plaque annexe présente en outre une première portion latérale de premier côté, la première portion latérale de premier côté s'étend suivant la première direction transversale à partir de la première portion centrale jusqu'à un premier bord latéral externe de premier côté, situé au-delà du premier bord principal de premier côté (de préférence d'au moins 5 centimètres).

Ainsi, le premier support annexe permet de s'adapter aux différences entre le premier dossier et le deuxième dossier non seulement dans une partie centrale, mais également dans une partie latérale.

Selon une caractéristique complémentaire conforme à la présente description, de préférence la première portion latérale de premier côté s'étend suivant la première direction d'élévation jusqu'à un premier bord inférieur de premier côté, le premier bord central inférieur étant situé entre le premier bord central supérieur et le premier bord inférieur de premier côté suivant la première direction d'élévation, et la première portion latérale de premier côté présente un bord interne de premier côté s'étendant en regard du premier bord principal de premier côté.

Il est ainsi possible de réaliser une grande variété de dossiers différents ayant des supports principaux géométriquement identiques.

Selon une caractéristique encore complémentaire conforme à la présente description, de préférence le premier support annexe s'étend suivant la première direction d'élévation sur une première hauteur entre le premier bord central supérieur et (un premier bord annexe inférieur auquel appartient) le premier bord inférieur de premier côté, le deuxième support annexe s'étend suivant la deuxième direction d'élévation sur une deuxième hauteur depuis le deuxième bord central supérieur, et la première hauteur est (strictement) supérieure à la deuxième hauteur.

Pouvoir faire varier la hauteur du support annexe permet de s'adapter efficacement aux spécificités de chaque dossier.

Selon une caractéristique encore complémentaire conforme à la présente description, la première hauteur est de préférence supérieure à la deuxième hauteur d'au moins 5 centimètres, de préférence d'au moins 10 centimètres.

Dans divers modes de réalisation de l'ensemble selon la divulgation, on peut éventuellement avoir recours en outre à l'une et/ou à l'autre des dispositions suivantes :
- le premier système de suspension présente un plan de symétrie s'étendant perpendiculairement à la première direction transversale ;
- la deuxième âme structurelle est géométriquement identique à la première âme structurelle ;
- la deuxième âme structurelle est techniquement identique à la première âme structurelle ;
- la première âme structurelle comprend un premier fil et la deuxième âme structurelle comprend un deuxième fil ;
- le premier fil présente une première section comprise entre 10 millimètres carrés et 100 millimètres carrés et le deuxième fil présentant une deuxième section comprise entre 10 millimètres carrés et 100 millimètres carrés ;
- le premier fil est en acier et le deuxième fil est en acier ;
   la première âme structurelle comprend une première portion de fil de premier côté et une première portion de fil de deuxième côté, la première portion de fil de deuxième côté et la première portion de fil de premier côté sont distantes l'une de l'autre suivant la première direction transversale d'une première distance d'au moins 20 centimètres, le premier support principal est fixé à la première portion de fil de premier côté et à la première portion de fil de deuxième côté, la deuxième âme structurelle comprend une deuxième portion de fil de premier côté et une deuxième portion de fil de deuxième côté, la deuxième portion de fil de deuxième côté et la deuxième portion de premier côté sont distantes l'une de l'autre suivant la deuxième direction transversale d'une deuxième distance d'au moins 20 centimètres, et le deuxième support principal est fixé à la deuxième portion de fil de premier côté et à la deuxième portion de fil de deuxième côté ;
- l'ensemble comprend un premier dossier et un deuxième dossier, le premier dossier comporte la première armature et le premier système de suspension, le deuxième dossier comporte la deuxième armature et le deuxième système de suspension, la première âme structurelle s'étend suivant la première direction d'élévation entre une première extrémité structurelle supérieure et une première extrémité structurelle inférieure, la première âme structurelle est fixée à la première armature à la première extrémité structurelle supérieure et à la première extrémité structurelle inférieure, et la deuxième âme structurelle s'étend suivant la deuxième direction d'élévation entre une deuxième extrémité structurelle supérieure et une deuxième extrémité structurelle inférieure, la deuxième âme structurelle est fixée à la deuxième armature à la deuxième extrémité structurelle supérieure et à la deuxième extrémité structurelle inférieure ;
- la deuxième armature est géométriquement identique à la première armature ;
   le premier support principal, le premier support annexe, le deuxième support principal, le deuxième support annexe sont en matériau plastique ;
   l'ensemble comprend en outre une première matelassure, une deuxième matelassure, une première coiffe et une deuxième coiffe, la première matelassure est disposée entre le premier support principal et la première coiffe, et la deuxième matelassure est disposée entre le deuxième support principal et la deuxième coiffe.

### Brève description des figures

D'autres caractéristiques et avantages de la présente divulgation apparaîtront dans la description détaillée suivante, se référant aux dessins annexés dans lesquels :
la figure 1 représente schématiquement en vue de côté un premier siège de véhicule comprenant un premier dossier ;
la figure 2 représente en perspective éclatée le premier siège comprenant le premier dossier, le premier dossier comportant un premier système de suspension,
la figure 3 représente en perspective le premier siège de véhicule,
la figure 4 représente le premier système de suspension en vue de face, suivant la flèche repérée IV à la figure 3,
la figure 5 représente le premier système de suspension en vue de derrière, suivant la flèche repérée V à la figure 3,
la figure 6 représente le premier dossier en coupe selon la ligne repérée VI-VI à la figure 3,
la figure 7 représente un deuxième siège comprenant un deuxième dossier, en perspective conformément à la figure 3, le deuxième dossier comportant un deuxième système de suspension,
la figure 8 représente le deuxième système de suspension en vue de face,
la figure 9 représente le deuxième système de suspension en vue de derrière.

### Description détaillée des modes de réalisations

Sur les différentes figures, les mêmes références désignent des éléments identiques ou similaires. À fin de concision, seuls les éléments qui sont utiles à la compréhension du mode de réalisation décrit sont représentés sur les figures et sont décrits de manière détaillée dans la suite.

Dans la description qui suit, lorsque l'on fait référence à des qualificatifs de position absolue, tels que les termes « avant », « arrière », « haut », « bas », « gauche », « droite », etc., ou relative, tels que les termes « dessus », « dessous », « supérieure », « inférieur », etc., ou à des qualificatifs d'orientation, tels que « horizontale », « vertical », etc., il est fait référence, sauf précision contraire, à l'orientation des figures ou d'un siège de véhicule dans sa position normale d'utilisation.

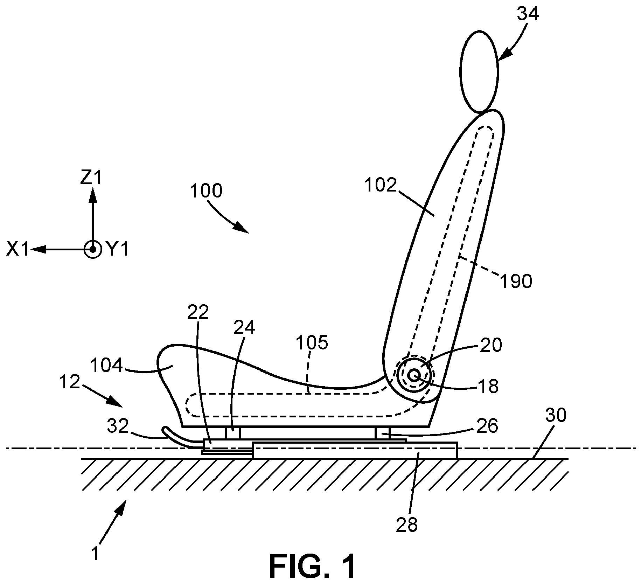

La figure 1 représente de façon schématique un premier siège 100 monté dans un véhicule automobile 1.

Une première direction longitudinale X1 s'entend de la direction longitudinale du premier siège 100. La direction longitudinale du siège est considérée être la même que la direction longitudinale du véhicule automobile 1 dans lequel le premier siège 100 est monté. La première direction longitudinale X1 correspond à la direction normale d'avancement du véhicule. La première direction longitudinale X1 est sensiblement horizontale. La première direction transversale Y1 s'entend de la direction transversale du premier siège 100 et correspond ainsi à la direction transversale ou latérale du véhicule automobile. Cette première direction transversale Y1 correspond à une direction perpendiculaire à la première direction longitudinale X1. La première direction transversale Y1 est sensiblement horizontale. Enfin, une première direction d'élévation Z1 est une direction sensiblement verticale du siège, perpendiculaire à la première direction longitudinale X1 et à la première direction transversale Y1. La première direction d'élévation Z1 correspond à une direction verticale du véhicule.

Le premier siège 100 de véhicule automobile est monté sur un mécanisme à glissières 12. Le premier siège 100 comporte une première assise 104 et un premier dossier 102. La première assise 104 comporte une première armature d'assise 105. Le premier dossier 102 comporte une première armature 190. La première armature 190 est montée sur la première armature d'assise 105, de manière pivotante autour d'un axe 18, s'étendant suivant la première direction transversale Y1, dans le mode de réalisation illustré. Pour ce faire, un mécanisme d'articulation 20 est disposé entre la première armature d'assise 105 et la première armature 190.

La première armature d'assise 105 est montée sur des profilés mobiles 22, également appelé coulisses ou profilés mâles, par l'intermédiaire de pieds avant 24 et de pieds arrière 26. Le mécanisme à glissière 12 comprend les profilés mobiles 22 et des profilés fixes 28. Chaque profilé mobile 22 coopère avec l'un des profilé fixe 28 au sein d'une des deux glissières du mécanisme à glissière 12. Chaque profilé fixe 28 est fixé à un plancher 30 du véhicule automobile 1.

Le premier siège 100 comprend, dans le mode de réalisation illustré, un élément de commande manuelle 32, appelé palonnier, configuré pour commander le déverrouillage/verrouillage en coulissement du mécanisme à glissière 12. L'élément de commande manuelle 32 permet notamment de débloquer/bloquer des systèmes d'arrêt du coulissement des profilés mobiles 22 par rapport aux profilés fixes 28 respectifs. Une fois les systèmes d'arrêt débloqués, l'élément de commande manuelle 32 peut également être utilisé pour faire coulisser les profilés mobiles 22 par rapport à leurs profilés fixes 28 respectifs, autrement dit le premier siège 100 par rapport au plancher 30, suivant la première direction longitudinale X1. Les profilés fixes 28 et les profilés mobiles 22 sont généralement métalliques.

Alternativement, la translation des profilés mobiles 22 suivant la première direction longitudinale X1 par rapport aux profilés fixes 28, autrement dit le déplacement du premier siège 100 par rapport au plancher 30, peut être commandé par un actionneur.

Dans le mode de réalisation illustré, le premier siège 102 peut également comprendre un appui-tête 34, l'appui-tête 34 comportant une armature d'appui-tête munie de tiges montées coulissantes suivant la première direction d'élévation Z1 sur la première armature 190 du premier dossier 102.

Dans la suite, on décrit plus en détail le premier dossier 102 du premier siège 100.

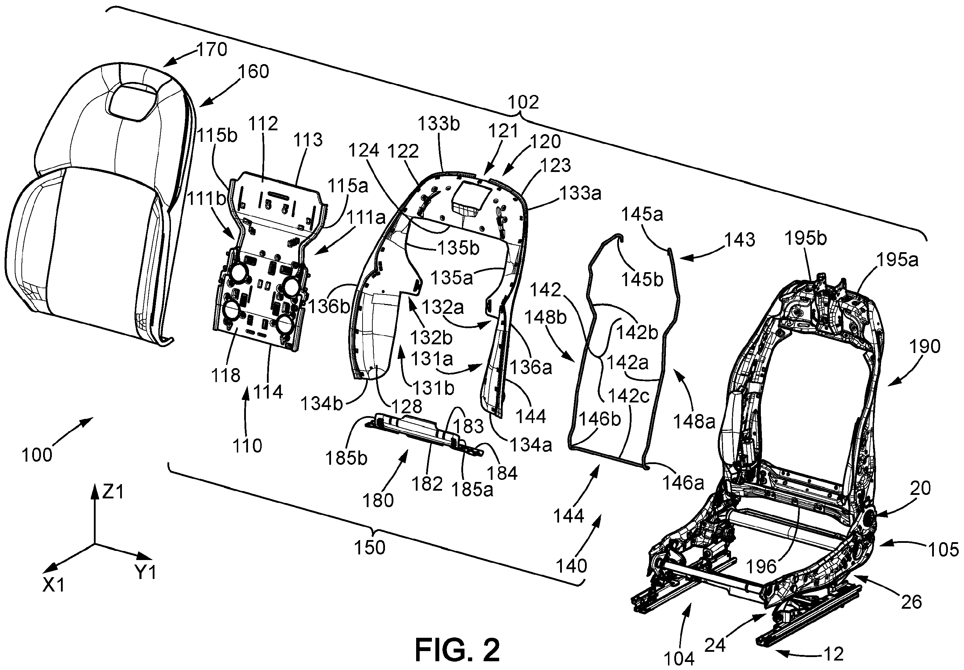

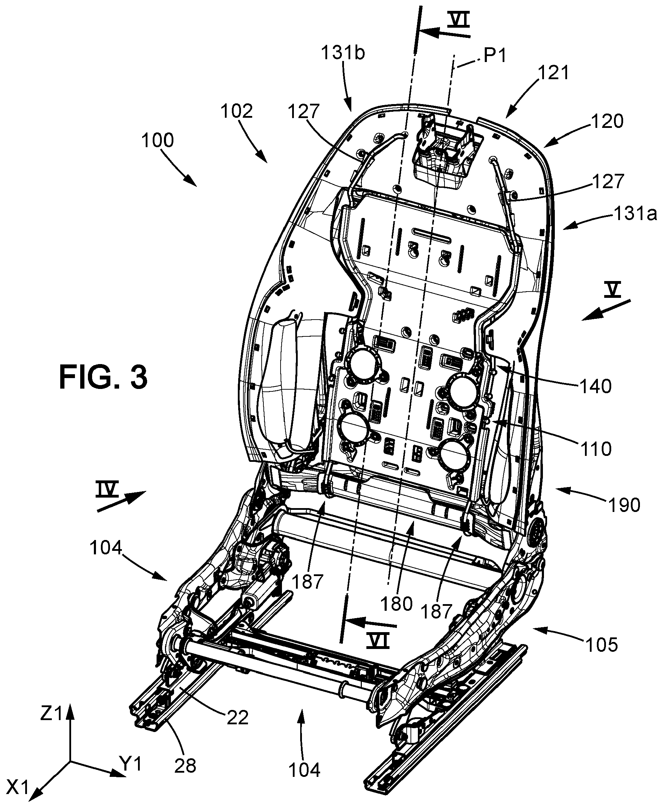

Comme illustré en particulier aux figures 2 à 6, le premier dossier 102 comprend essentiellement la première armature 190, un premier système de suspension 150, une première matelassure 160 et une première coiffe 170.

Le premier système de suspension 150 comporte un premier support principal 110, un premier support annexe 120, un premier support secondaire 180 et une première âme structurelle 140.

Le premier support principal 110 est monobloc et comporte une première plaque principale 112 et des premiers éléments principaux d'emboitage élastique 117 (ou premiers clips principaux). Les premiers éléments principaux d'emboitage élastique 117 sont obtenus de matière (lors de la même opération de moulage) avec la première plaque principale 112. La première plaque principale 112 présente une première face principale avant 118 et une première face principale arrière 119. La première plaque principale 112 est sensiblement plane, d'épaisseur constante et s'étend sensiblement perpendiculairement à la première direction longitudinale X1. La première plaque principale 112 s'étend suivant la première direction d'élévation Z1 entre un premier bord principal supérieur 113 et un premier bord principal inférieur 114. La première plaque principale 112 s'étend suivant la première direction transversale Y1 entre un premier bord principal de premier côté 115a et un premier bord principal de deuxième côté 115b. Le premier bord principal supérieure 113 et le premier bord principal inférieur 114 s'étendent sensiblement suivant la première direction transversale Y1. Le premier bord principal de premier côté 115a et le premier bord principal de deuxième côté 115b s'étendent sensiblement suivant la première direction d'élévation Z1. La première plaque principale 112 est donc sensiblement rectangulaire.

Le premier support annexe 120 est monobloc et distinct du premier support principal 110. Le premier support annexe 120 comporte une première plaque annexe 122, des premiers éléments centraux d'emboitage élastique 127 (ou premiers clips annexes) et des premiers éléments latéraux d'emboitage élastique 137 (ou premiers clips latéraux). Les premiers éléments centraux d'emboitage élastique 127 et les premiers éléments latéraux d'emboitage élastique 137 sont obtenus de matière (lors de la même opération de moulage) avec la première plaque annexe 122. La première plaque annexe 122 présente une première face annexe avant 128 et une première face annexe arrière 129. La première plaque annexe 122 présente une première portion centrale 121, une première portion latérale de premier côté 131a et une première portion latérale de deuxième côté 131b. La première portion centrale s'étend suivant la première direction d'élévation Z1 entre un premier bord central supérieur 123 et un premier bord central inférieur 124. La première portion centrale 121 s'étend suivant la première direction transversale Y1 entre une première frontière de premier côté 130a et une première frontière de deuxième côté 130b. Le premier bord central supérieur 123 et le premier bord central inférieur 124 s'étendent sensiblement suivant la première direction transversale Y1.

La première portion centrale 121 est adjacente à la première plaque principale 112. Le premier bord central inférieur 124 est en regard du premier bord principal supérieur 113. La première portion centrale 121 s'étend dans le prolongement de la première plaque principale 112. La première frontière de premier côté 130a s'étend dans le prolongement du premier bord principal de premier côté 115a suivant la première direction d'élévation Z1 et la première frontière de deuxième côté 130b s'étend dans le prolongement du premier bord principal de deuxième côté 115b suivant la direction d'élévation Z1. La première portion centrale 121 est sensiblement rectangulaire.

La première portion latérale de premier côté 131a s'étend suivant la première direction latérale Y1 depuis la première frontière de premier côté 130a jusqu'à un premier bord externe de premier côté 136a situé au-delà du premier bord principal de premier côté 115a. La première portion latérale de premier côté 131a s'étend suivant la première direction d'élévation Z1 depuis un premier bord supérieur de premier côté 133a jusqu'à un premier bord inférieur de premier côté 134a. Le premier bord supérieur de premier côté 133a s'étend suivant la première direction transversale Y1 dans le prolongement du premier bord central supérieur 113. Le premier bord central inférieur 124 est situé entre le premier bord central supérieur 123 et le premier bord inférieur de premier côté 134a, autrement dit la première portion latérale de premier côté 131a descend plus bas que la première portion centrale 121. En outre, suivant la première direction d'élévation Z1, le premier bord principal supérieur 113 est situé entre le premier bord central inférieur 124 et le premier bord inférieur de premier côté 134a, autrement dit la première portion latérale de premier côté 131a présente un premier bord interne de premier côté 135a s'étendant en regard du premier bord principal de premier côté 115a. De préférence, l'espacement entre le premier bord interne de premier côté 135a et le premier bord principal de premier côté 115a est compris entre 5 millimètres et 5 centimètres. Dans le mode de réalisation illustré, le premier bord inférieur de premier côté 134a est sensiblement au même niveau suivant la première direction d'élévation Z1 que le premier bord principal inférieur 114. Autrement dit, le premier bord interne de premier côté 135a s'étend en regard du premier bord principal de premier côté 115a tout le long du premier bord principal de premier côté 115a.

Le premier système de suspension 150 présente un premier plan de symétrie P1 s'étendant perpendiculairement à la première direction transversale Y1. En particulier, le premier support principal 110, le premier support annexe 120 et la première âme structurelle 140 sont symétriques par rapport au premier plan de symétrie P1.

La première portion latérale de deuxième côté 131b s'étend suivant la première direction latérale Y1 depuis la première frontière de deuxième côté 130b jusqu'à un premier bord externe de deuxième côté 136b situé au-delà du premier bord principal de deuxième côté 115b. La première portion latérale de deuxième côté 131b s'étend suivant la première direction d'élévation Z1 depuis un premier bord supérieur de deuxième côté 133b jusqu'à un premier bord inférieur de deuxième côté 134b. Le premier bord supérieur de deuxième côté 133b s'étend suivant la première direction transversale Y1 dans le prolongement du premier bord central supérieur 113. Le premier bord central inférieur 124 est situé entre le premier bord central supérieur 123 et le premier bord inférieur de deuxième côté 134b, autrement dit la première portion latérale de deuxième côté 131b descend plus bas que la première portion centrale 121. En outre, suivant la première direction d'élévation Z1, le premier bord principal supérieur 113 est situé entre le premier bord central inférieur 124 et le premier bord inférieur de deuxième côté 134b, autrement dit la première portion latérale de deuxième côté 131b présente un premier bord interne de deuxième côté 135b s'étendant en regard du premier bord principal de deuxième côté 115b. De préférence, l'espacement entre le premier bord interne de deuxième côté 135b et le premier bord principal de deuxième côté 115b est compris entre 5 millimètres et 5 centimètres. Dans le mode de réalisation illustré, le premier bord inférieur de deuxième côté 134a est sensiblement au même niveau suivant la première direction d'élévation Z1 que le premier bord principal inférieur 114. Autrement dit, le premier bord interne de deuxième côté 135b s'étend en regard du premier bord principal de deuxième côté 115b tout le long du premier bord principal de deuxième côté 115b.

Le premier support annexe 120 s'étend suivant la première direction d'élévation Z1 sur une première hauteur H1 entre le premier bord central supérieur 123 et un premier bord annexe inférieur défini par le premier bord inférieur de premier côté 134a et le premier bord inférieur de deuxième côté 134b.

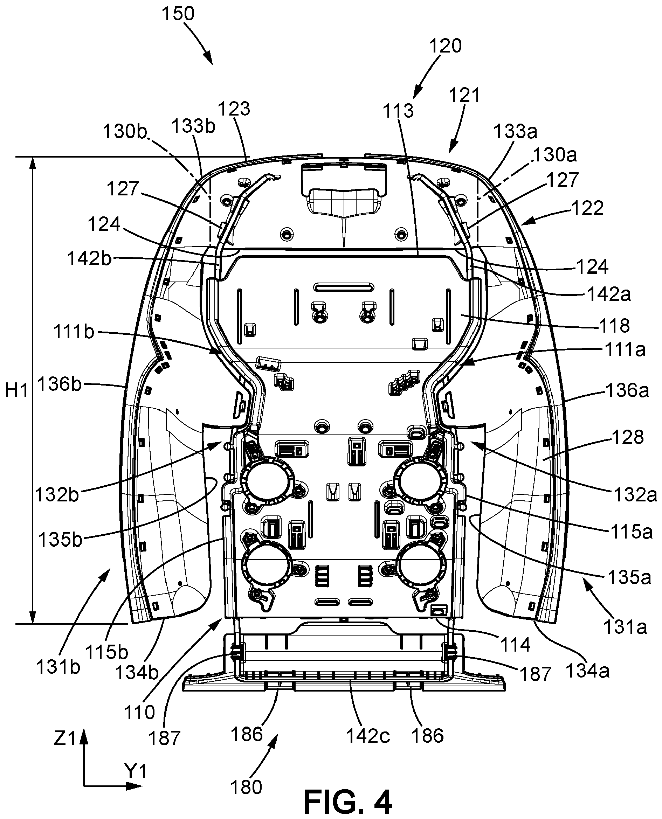

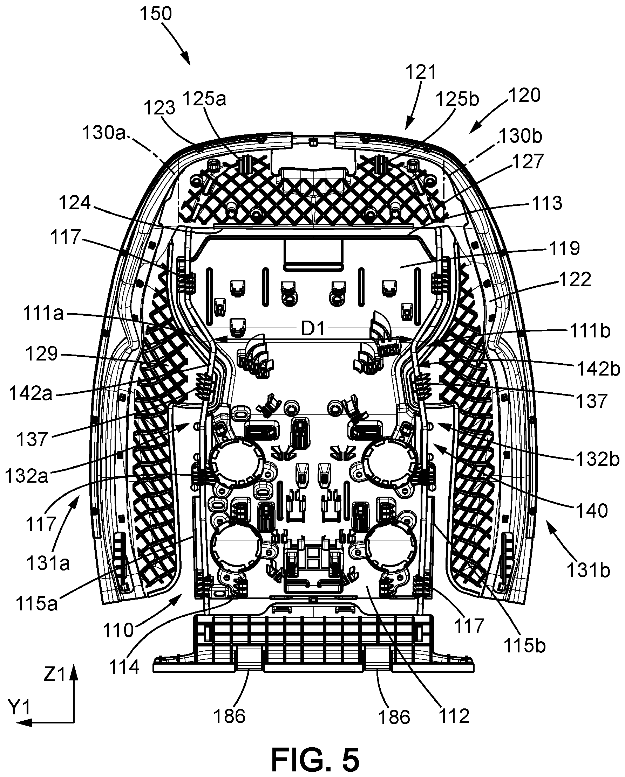

Tel qu'illustré en particulier aux figures 4 et 5, les premiers éléments principaux d'emboitage élastique 117 sont disposés sur la première face principale arrière 119 le long du premier bord principal de premier côté 115a et du premier bord principal de deuxième côté 115b. Les premiers éléments centraux d'emboitage élastique 127 sont disposés sur la première face annexe avant 128, dans la première portion centrale 121, à proximité de la première frontière de premier côté 130a et de la première frontière de deuxième côté 130b. Les premiers éléments latéraux d'emboitage élastique 137 sont disposés sur la première face annexe arrière 129.

La première plaque principale 112 présente une première échancrure de premier côté 111a, le premier bord de premier côté 115a formant un creux suivant la première direction transversale Y1 et une première échancrure de deuxième côté 111b, le premier bord de deuxième côté 115b formant un creux suivant la première direction transversale Y1. La première portion latérale de premier côté 131a présente une première aile de premier côté 132a faisant saillie vers la première plaque principale 112 suivant la première direction transversale Y1 et s'insérant dans la première échancrure de premier côté 111a. La première aile de premier côté 132a porte l'un des premiers éléments latéraux d'emboitage élastique 137. La première portion latérale de deuxième côté 131b présente une première aile de deuxième côté 132b faisant saillie vers la première plaque principale 112 suivant la première direction transversale Y1 et s'insérant dans la première échancrure de deuxième côté 111b. La première portion latérale de deuxième côté 131b porte l'un des premiers éléments latéraux d'emboitage élastique 137.

Le premier support principal 110, le premier support annexe 120 et le premier support secondaire 180 sont de préférence en matériau plastique.

La première âme structurelle 140 s'étend suivant la première direction d'élévation Z1 entre une première extrémité structurelle supérieure 143 et une première extrémité structurelle inférieure 144. La première âme structurelle 140 est fixée à la première armature 190 à la première extrémité structurelle supérieure 143 et à la première extrémité structurelle inférieure 144.

Dans le mode de réalisation illustré, la première âme structurelle 140 comprend plus précisément un premier fil 142. Le premier fil 142 comporte une première portion de fil de premier côté 142a, une première portion de fil de deuxième côté 142b et une première portion de fil inférieure 142c. La première portion de fil de premier côté 142a et la première portion de fil de deuxième côté 142b s'étendent sensiblement suivant la première direction d'élévation Z1. La première portion de fil inférieure 142c s'étend sensiblement suivant la première direction transversale Y1. La première portion de fil inférieure 142c s'étend à la première extrémité structurelle inférieure 144. La première portion de fil inférieure 142c s'étend entre la première portion de fil de premier côté 142a et la première portion de fil de deuxième côté 142b, de sorte que la première portion de fil de premier côté 142a, la première portion de fil inférieure 142c et la première portion de fil de deuxième côté 142b forment trois parties successives du seul et unique premier fil 142 constituant la première âme structurelle 140.

La première portion de fil de premier côté 142a présente une première portion supérieure de fixation de premier côté 145a. La première portion supérieure de fixation de premier côté 145a est recourbée autour de la première direction transversale Y1, la première portion supérieure de fixation de premier côté 145a formant ainsi un crochet. Tel qu'illustré en particulier à la figure 5, la première portion centrale 121 comporte un premier alésage de premier côté 125a présentant une longueur L supérieure ou égale à 3 centimètres et faisant saille par rapport à la première face principale arrière 119. A la première extrémité structurelle supérieure 143, la première portion supérieure de fixation de premier côté 145a est rectiligne et reçue dans le premier alésage de premier côté 125a.

La première portion de fil de deuxième côté 142b présente une première portion supérieure de fixation de deuxième côté 145b. La première portion supérieure de fixation de deuxième côté 145b est recourbée autour de la première direction transversale Y1, la première portion supérieure de fixation de deuxième côté 145a formant ainsi un crochet. Tel qu'illustré en particulier à la figure 5, la première portion centrale 121 présente un premier alésage de deuxième côté 125b faisant saille sur au moins 3 centimètres par rapport à la première face principale arrière 119. A la première extrémité structurelle supérieure 143, la première portion supérieure de fixation de deuxième côté 145a est rectiligne et reçue dans le premier alésage de deuxième côté 125b.

La première portion supérieure de fixation de premier côté 145a et la première portion supérieure de fixation de deuxième côté 145b sont recourbées autour de la première direction transversale Y1 entre 120 degrés et 180 degrés, de préférence sur environ 150 degrés.

La première extrémité structurelle supérieure 143 de la première portion supérieure de fixation de premier côté 145a et le premier alésage de premier côté 125a entourant étroitement la première extrémité structurelle supérieure 143 de la première portion supérieure de fixation de premier côté 145a sont reçues dans un premier trou de fixation de premier côté 195a de la première armature 190. La première extrémité structurelle supérieure 143 de la première portion supérieure de fixation de deuxième côté 145b et le premier alésage de deuxième côté 125b entourant étroitement la première extrémité structurelle supérieure 143 de la première portion supérieure de fixation de deuxième côté 145b sont reçues dans un premier trou de fixation de deuxième côté 195b de la première armature 190.

La première portion de fil de premier côté 142a présente une première portion inférieure de fixation de premier côté 146a. La première portion inférieure de fixation de premier côté 146a est recourbée autour de la première direction transversale Y1 à la première extrémité structurelle inférieure 144 entre 80 degrés et 100 degrés, dans le même sens que la première portion supérieure de fixation de premier côté 145a et la première portion supérieure de fixation de deuxième côté 145b. La première portion de fil de deuxième côté 142b présente une première portion inférieure de fixation de deuxième côté 146b. La première portion inférieure de fixation de deuxième côté 146b est recourbée autour de la première direction transversale Y1 à la première extrémité structurelle inférieure 144 entre 80 degrés et 100 degrés, dans le même sens que la première portion inférieure de fixation de premier côté 146a.

La première portion de fil de premier côté 142a présente une première portion de maintien de premier côté 148a entre la première portion supérieure de fixation de premier côté 145a et la première portion inférieure de fixation de premier côté 146a. La première portion de fil de deuxième côté 142b présente une première portion de maintien de deuxième côté 148b entre la première portion supérieure de fixation de deuxième côté 145b et la première portion inférieure de fixation de deuxième côté 146b.

Le premier support principal 110 est fixé directement sur la première portion de maintien de premier côté 148a par les premiers éléments principaux d'emboitage élastique 117 disposés le long du premier bord principal de premier côté 115a et sur la première portion de maintien de deuxième côté 148b par les premiers éléments principaux d'emboitage élastique 117 disposés le long du premier bord principal de deuxième côté 115b.

Le premier support annexe 120 est fixé directement sur la première âme structurelle 140. Plus précisément, la première portion centrale 121 est fixée sur la première portion de maintien de premier côté 148a par l'intermédiaire des premiers éléments centraux d'emboitage élastique 127 disposés à proximité de la première frontière de premier côté 130a et sur la première portion de maintien de deuxième côté 148b par l'intermédiaire des premiers éléments centraux d'emboitage élastique 127 disposés à proximité de la première frontière de deuxième côté 130b. La première portion latérale de premier côté 131a est fixée sur la première portion de maintien de premier côté 148a par l'intermédiaire de l'un des premiers éléments d'emboitage élastique 137. La première portion latérale de deuxième côté 131b est fixée sur la première portion de maintien de deuxième côté 148b par l'intermédiaire de l'un des premiers éléments latéraux d'emboitage élastique 137.

La première portion de fil de premier côté 142a, en particulier la première portion de maintien de premier côté 148a, est distante suivante la première direction transversale Y1 d'une première distance D1, de préférence comprise entre 20 centimètres et 50 centimètres, par rapport à la première portion de fil de deuxième côté 142b, en particulier par rapport à la première portion de maintien de deuxième côté 148b.

Le premier fil 142 présente une section transversale comprise de préférence entre 10 millimètres carrés et 100 millimètres carrés. Le premier fil 142 est de préférence en acier, usuellement qualifié d'acier à ressort.

Le premier support secondaire 180 comporte une première plaque secondaire 182 et des premiers éléments secondaires d'emboitage élastique 187 (ou premiers clips secondaires). Les premiers éléments secondaires d'emboitage élastique 187 sont obtenus de matière (lors de la même opération de moulage) avec la première plaque secondaire 182. La première plaque secondaire 182 présente une première face secondaire avant 188 et une première face secondaire arrière 189.

La première plaque secondaire 182 est d'épaisseur constante et courbe. La première plaque secondaire 182 s'étend suivant la première direction d'élévation Z1 et la première direction longitudinale X1 entre un premier bord secondaire supérieur 183 et un premier bord secondaire arrière 184. La première plaque secondaire 182 s'étend suivant la première direction transversale Y1 entre un premier bord secondaire de premier côté 185a et un premier bord secondaire de deuxième côté 185b. Le premier bord secondaire supérieure 183 et le premier bord secondaire arrière 184 s'étendent sensiblement suivant la première direction transversale Y1. Le premier bord secondaire de premier côté 185a et le premier bord secondaire de deuxième côté 185b s'étendent depuis le premier bord secondaire supérieure 183 vers le premier bord secondaire arrière 184 suivant la première direction d'élévation Z1, puis progressivement vers la première direction longitudinale X1, et en outre en s'éloignant l'un de l'autre suivant la première direction transversale Y1.

Le premier bord secondaire supérieur 183 est en regard du premier bord principal inférieur 114. La première plaque secondaire 182 s'étend dans le prolongement de la première plaque principale 112, la première plaque principale 110 étant disposée entre la première plaque secondaire 182 et la première plaque annexe 122 suivant la première direction d'élévation Z1.

La première plaque secondaire 182 est incurvée, afin d'épouser la forme de la première âme structurelle 140 à proximité de la première extrémité structurelle inférieure 144. En particulier, la première plaque secondaire 182 est au contact de la première portion inférieure de fixation de premier côté 146a et de la première portion inférieure de fixation de deuxième côté 146b.

Les premiers éléments secondaires d'emboitage élastique 187 sont disposés sur la première face secondaire arrière 189. Le premier support secondaire 180 est fixé directement sur la première portion inférieure de fixation de premier côté 148a et sur la première portion inférieure de fixation de deuxième côté 148b par les premiers éléments secondaires d'emboitage élastique 187. Alternativement ou en complément des premiers éléments secondaires d'emboitage élastiques 187 illustrés, le premier support secondaire 180 pourrait être fixé sur la première portion de fil inférieure 142c par des éléments d'emboitage élastique analogues.

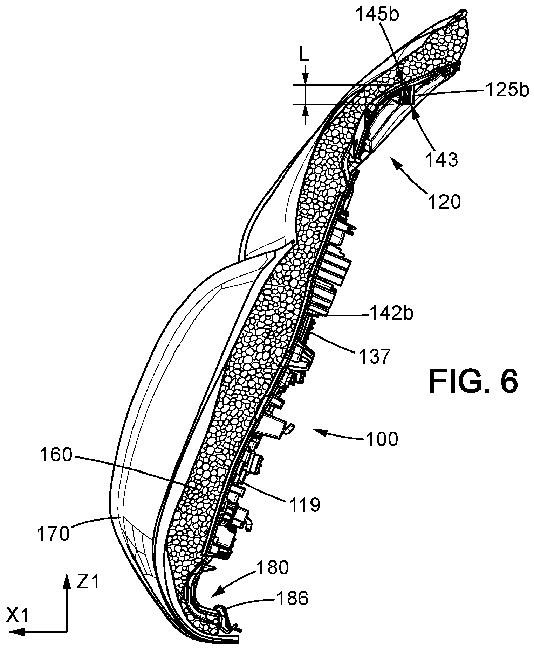

Tel qu'illustré en particulier aux figures 5 et 6, le premier support secondaire 180 intègre en outre des premières pattes élastiques de fixation 186 faisant saillie sur la première face secondaire arrière 189 et coopérant avec la première traverse inférieure 196 pour fixer de manière libérable la première âme structurelle 140 sur la première armature 190.

Pour réaliser le premier dossier 102, on réalise le premier support principal 110, le premier support annexe 120, la première âme structurelle 140 et le premier support secondaire 180. Puis, on réalise le premier système de suspension 150 en fixant le premier support principal 110, le premier support annexe 120 et le premier support secondaire 180 sur la première âme structurelle 140. Le premier système de suspension 150 forme alors un premier module dont tous les éléments sont maintenus les uns par rapport aux autres. Le premier système de suspension 150 peut alors être aisément transporté en un lieu où est fabriquée la première armature 190.

La première âme structurelle 140 et plus globalement le premier système de suspension est ensuite suspendu sur la première armature 190 (en insérant la première extrémité structurelle supérieure 143 dans le premier trou de fixation de premier côté 195a et le premier trou de fixation de deuxième côté 195b). Puis, la première extrémité structurelle inférieure 144 est engagée sous la première traverse inférieure 196 de la première armature 190. Les premières pattes élastiques de fixation 186 se déforment, puis reviennent élastiquement pour former une butée fixant la première extrémité structurelle inférieure 144 à la première armature 190.

La première matelassure 180 est ensuite disposée sur la première face principale avant 118, la première face annexe avant 128 et la première face secondaire avant 188. La première matelassure 180 est ensuite recouverte de la première coiffe 170 et la première coiffe 170 est maintenue sur la première armature 190 par des techniques usuelles bien connues, ce qui maintient la première matelassure 180 entre la première coiffe 170 et le premier système de suspension 150.

En variante, comme il est également connu, la première matelassure pourrait être réalisée en une seule partie par moussage sur le premier système de suspension ou alternativement en plusieurs parties moussées respectivement sur le premier support principal 110, le premier support annexe 120 et le premier support secondaire 180.

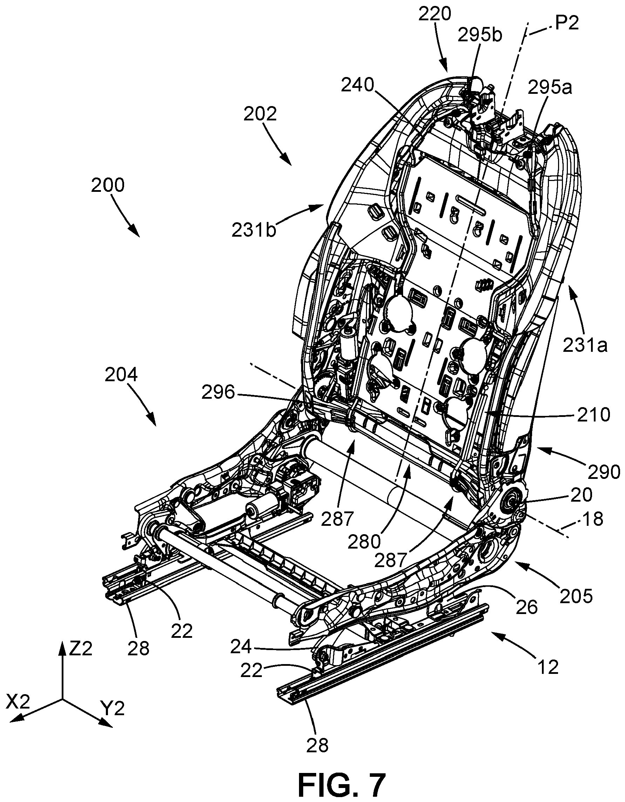

Les figures 7 à 9 représente un deuxième siège 200 destiné à être monté dans un véhicule automobile.

Le deuxième siège 200 de véhicule automobile est monté sur un mécanisme à glissières 12. Le deuxième siège 200 comporte une deuxième assise 204 et un deuxième dossier 202. La deuxième assise 204 comporte une deuxième armature d'assise 205. Le deuxième dossier 202 comporte une deuxième armature 290. La deuxième armature 290 est montée sur la deuxième armature d'assise 205, de manière pivotante autour d'un axe 18, s'étendant, dans le mode de réalisation illustré, suivant une deuxième direction transversale Y2 perpendiculaire à la deuxième direction longitudinale X2 et à la deuxième direction d'élévation Z2. Pour ce faire, un mécanisme d'articulation 20 est disposé entre la deuxième armature d'assise 205 et la deuxième armature 290.

La deuxième armature d'assise 205 est montée sur des profilés mobiles 22, également appelé coulisses ou profilés mâles, par l'intermédiaire de pieds avant 24 et de pieds arrière 26. Le mécanisme à glissière 12 comprend les profilés mobiles 22 et des profilés fixes 28. Chaque profilé mobile 22 coopère avec l'un des profilé fixe 28 au sein d'une des deux glissières du mécanisme à glissière 12. Chaque profilé fixe 28 est destiné à être fixé à un plancher du véhicule automobile.

Le deuxième siège 200 comprend, dans le mode de réalisation illustré, un élément de commande manuelle (non représenté), appelé palonnier, configuré pour commander le déverrouillage/verrouillage en coulissement du mécanisme à glissière 12. L'élément de commande manuelle permet notamment de débloquer/bloquer des systèmes d'arrêt du coulissement des profilés mobiles 22 par rapport aux profilés fixes 28 respectifs. Une fois les systèmes d'arrêt débloqués, l'élément de commande manuelle peut également être utilisé pour faire coulisser les profilés mobiles 22 par rapport à leurs profilés fixes 28 respectifs, autrement dit le deuxième siège 200 par rapport au plancher, suivant une deuxième direction longitudinale X2. Les profilés fixes 28 et les profilés mobiles 22 sont généralement métalliques.

Alternativement, la translation des profilés mobiles 22 suivant la deuxième direction longitudinale X2 par rapport aux profilés fixes 28, autrement dit le déplacement du deuxième siège 200 par rapport au plancher 30, peut être commandé par un actionneur.

Dans le mode de réalisation illustré, le deuxième siège 202 peut également comprendre un appui-tête, l'appui-tête comportant une armature d'appui-tête munie de tiges montées coulissantes sur la deuxième armature 290, suivant une deuxième direction d'élévation Z2 perpendiculaire à la deuxième direction longitudinale X2.

Dans la suite, on décrit plus en détail le deuxième dossier 202 du deuxième siège 200.

Comme illustré en particulier aux figures 7 à 9, le deuxième dossier 202 comprend essentiellement la deuxième armature 290, un deuxième système de suspension 250, une deuxième matelassure et une deuxième coiffe (non représentées).

Le deuxième système de suspension 250 comporte un deuxième support principal 210, un deuxième support annexe 220, un deuxième support secondaire 280 et une deuxième âme structurelle 240.

Le deuxième support principal 210 est monobloc et comporte une deuxième plaque principale 212 et des deuxièmes éléments principaux d'emboitage élastique 217 (ou deuxième clips principaux). Les deuxièmes éléments principaux d'emboitage élastique 217 sont obtenus de matière (lors de la même opération de moulage) avec la deuxième plaque principale 222. La deuxième plaque principale 212 présente une deuxième face principale avant 218 et une deuxième face principale arrière 219. La deuxième plaque principale 212 est sensiblement plane, d'épaisseur constante et s'étend sensiblement perpendiculairement à la deuxième direction longitudinale X2. La deuxième plaque principale 212 s'étend suivant la deuxième direction d'élévation Z2 entre un deuxième bord principal supérieur 213 et un deuxième bord principal inférieur 214. La deuxième plaque principale 212 s'étend suivant la deuxième direction transversale Y2 entre un deuxième bord principal de premier côté 215a et un deuxième bord principal de deuxième côté 215b. Le deuxième bord principal supérieure 213 et le deuxième bord principal inférieur 214 s'étendent sensiblement suivant la deuxième direction transversale Y2. Le deuxième bord principal de premier côté 215a et le deuxième bord principal de deuxième côté 215b s'étendent sensiblement suivant la deuxième direction d'élévation Z2. La deuxième plaque principale 212 est donc sensiblement rectangulaire.

Le deuxième support annexe 220 est monobloc et distinct du deuxième support principal 210. Le deuxième support annexe 220 comporte une deuxième plaque annexe 222, des deuxièmes éléments centraux d'emboitage élastiques 227 (ou deuxième clips annexes) et des deuxièmes éléments latéraux d'emboitage élastique 237 (ou deuxième clips latéraux). Les deuxièmes éléments centraux d'emboitage élastique 227 et les deuxièmes éléments latéraux d'emboitage élastique 137 sont obtenus de matière (lors de la même opération de moulage) avec la deuxième plaque annexe 222. La deuxième plaque annexe 222 présente une deuxième face annexe avant 228 et une deuxième face annexe arrière 229. La deuxième plaque annexe 222 présente une deuxième portion centrale 221, une deuxième portion latérale de premier côté 231 a et une deuxième portion latérale de deuxième côté 231b. La deuxième portion centrale s'étend suivant la deuxième direction d'élévation Z2 entre un deuxième bord central supérieur 223 et un deuxième bord central inférieur 224. La deuxième portion centrale 221 s'étend suivant la deuxième direction transversale Y2 entre une deuxième frontière de premier côté 230a et une deuxième frontière de deuxième côté 230b. Le deuxième bord central supérieur 223 et le deuxième bord central inférieur 224 s'étendent sensiblement suivant la deuxième direction transversale Y2.

La deuxième portion centrale 221 est adjacente à la deuxième plaque principale 212. Le deuxième bord central inférieur 224 est en regard du deuxième bord principal supérieur 213. La deuxième portion centrale 221 s'étend dans le prolongement de la deuxième plaque principale 212. La deuxième frontière de premier côté 230a s'étend dans le prolongement du deuxième bord principal de premier côté 215a suivant la deuxième direction d'élévation Z2 et la deuxième frontière de deuxième côté 230b s'étend dans le prolongement du deuxième bord principal de deuxième côté 215b suivant la deuxième direction d'élévation Z2. La deuxième portion centrale 221 est sensiblement rectangulaire.

La deuxième portion latérale de premier côté 231a s'étend suivant la deuxième direction latérale Y2 depuis la deuxième frontière de premier côté 230a jusqu'à un deuxième bord externe de premier côté 236a situé au-delà du deuxième bord principal de premier côté 215a. La deuxième portion latérale de premier côté 231a s'étend suivant la deuxième direction d'élévation Z2 depuis un deuxième bord supérieur de premier côté 233a jusqu'à un deuxième bord inférieur de premier côté 234a. Le deuxième bord supérieur de premier côté 233a s'étend suivant la deuxième direction transversale Y2 dans le prolongement du deuxième bord central supérieur 213. Le deuxième bord central inférieur 224 est situé entre le deuxième bord central supérieur 223 et le deuxième bord inférieur de premier côté 234a, autrement dit la deuxième portion latérale de premier côté 231a descend plus bas que la deuxième portion centrale 221. En outre, suivant la deuxième direction d'élévation Z2, le deuxième bord principal supérieur 213 est situé entre le deuxième bord central inférieur 224 et le deuxième bord inférieur de premier côté 234a, autrement dit la deuxième portion latérale de premier côté 231a présente un deuxième bord interne de premier côté 235a s'étendant en regard du deuxième bord principal de premier côté 215a. De préférence, l'espacement entre le deuxième bord interne de premier côté 235a et le deuxième bord principal de premier côté 215a est compris entre 5 millimètres et 5 centimètres. Dans le mode de réalisation illustré, le deuxième bord inférieur de premier côté 234a est sensiblement au même niveau suivant la deuxième direction d'élévation Z2 que le deuxième bord principal inférieur 214. Autrement dit, le deuxième bord interne de premier côté 235a s'étend en regard du deuxième bord principal de premier côté 215a tout le long du deuxième bord principal de premier côté 215a.

Le deuxième système de suspension 250 présente un deuxième plan de symétrie P2 s'étendant perpendiculairement à la deuxième direction transversale Y2. En particulier, le deuxième support principal 210, le deuxième support annexe et la deuxième âme structurelle 240 sont symétriques par rapport au deuxième plan de symétrie P2.

La deuxième portion latérale de deuxième côté 231b s'étend suivant la deuxième direction latérale Y2 depuis la deuxième frontière de deuxième côté 230b jusqu'à un deuxième bord externe de deuxième côté 236b situé au-delà du deuxième bord principal de deuxième côté 215b. La deuxième portion latérale de deuxième côté 231b s'étend suivant la deuxième direction d'élévation Z2 depuis un deuxième bord supérieur de deuxième côté 233b jusqu'à un deuxième bord inférieur de deuxième côté 234b. Le deuxième bord supérieur de deuxième côté 233b s'étend suivant la deuxième direction transversale Y2 dans le prolongement du deuxième bord central supérieur 213. Le deuxième bord central inférieur 224 est situé entre le deuxième bord central supérieur 223 et le deuxième bord inférieur de deuxième côté 234b, autrement dit la deuxième portion latérale de deuxième côté 231b descend plus bas que la deuxième portion centrale 221. En outre, suivant la deuxième direction d'élévation Z2, le deuxième bord principal supérieur 213 est situé entre le deuxième bord central inférieur 224 et le deuxième bord inférieur de deuxième côté 234b, autrement dit la deuxième portion latérale de deuxième côté 231b présente un deuxième bord interne de deuxième côté 235b s'étendant en regard du deuxième bord principal de deuxième côté 215b. De préférence, l'espacement entre le deuxième bord interne de deuxième côté 235b et le deuxième bord principal de deuxième côté 215b est compris entre 5 millimètres et 5 centimètres. Dans le mode de réalisation illustré, le deuxième bord inférieur de deuxième côté 234a est sensiblement au même niveau suivant la deuxième direction d'élévation Z2 que le deuxième bord principal inférieur 214. Autrement dit, le deuxième bord interne de deuxième côté 235b s'étend en regard du deuxième bord principal de deuxième côté 215b tout le long du deuxième bord principal de deuxième côté 215b.

Le deuxième support annexe 220 s'étend suivant la deuxième direction d'élévation Z2 sur une deuxième hauteur H2 entre le deuxième bord central supérieur 223 et un deuxième bord annexe inférieur défini par le deuxième bord inférieur de premier côté 234a et le deuxième bord inférieur de deuxième côté 234b.

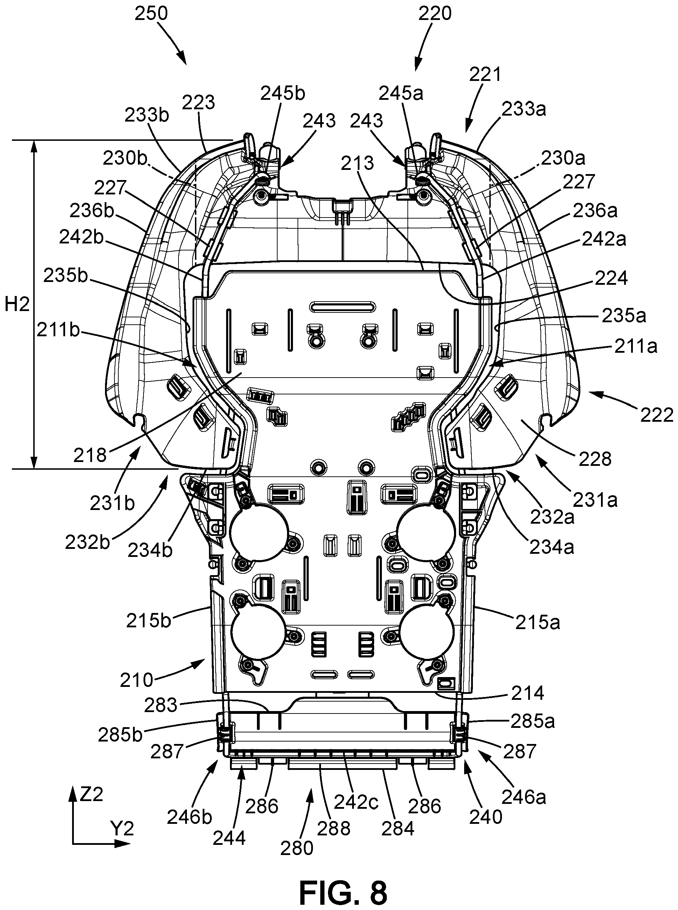

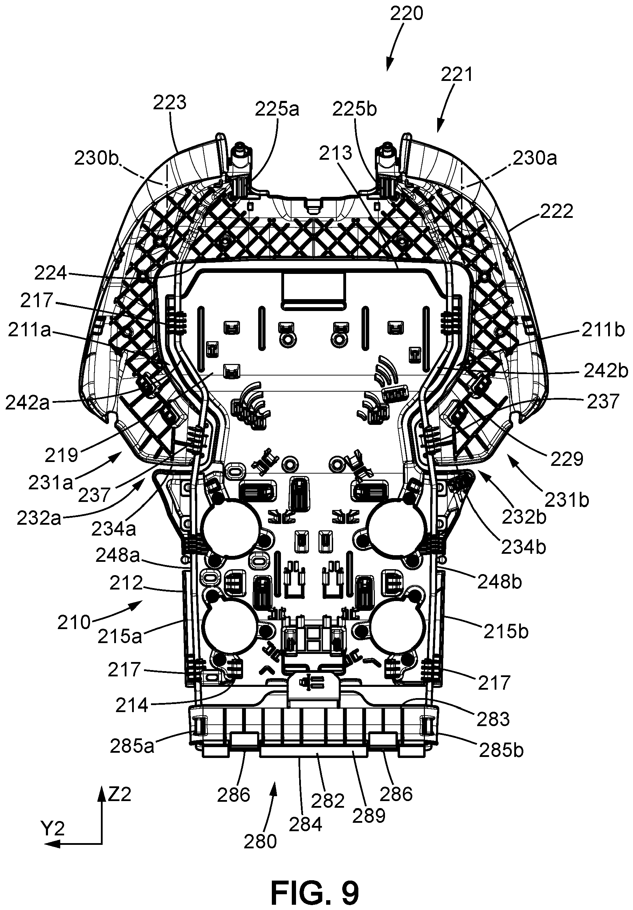

Tel qu'illustré en particulier aux figures 8 et 9, les deuxièmes éléments principaux d'emboitage élastique 217 sont disposés sur la deuxième face principale arrière 219 le long du deuxième bord principal de premier côté 215a et du deuxième bord principal de deuxième côté 215b. Les deuxièmes éléments centraux d'emboitage élastique 227 sont disposés sur la deuxième face annexe avant 228, dans la deuxième portion centrale 221, à proximité de la deuxième frontière de premier côté 230a et de la deuxième frontière de deuxième côté 230b. Les deuxièmes éléments latéraux d'emboitage élastique 237 sont disposés sur la deuxième face annexe arrière 229.

La deuxième plaque principale 212 présente une deuxième échancrure de premier côté 211a, le deuxième bord de premier côté 215a formant un creux suivant la deuxième direction transversale Y2 et une deuxième échancrure de deuxième côté 211b, le deuxième bord de deuxième côté 215b formant un creux suivant la deuxième direction transversale Y2. La deuxième portion latérale de premier côté 231a présente une deuxième aile de premier côté 232a faisant saillie vers la deuxième plaque principale 212 suivant la deuxième direction transversale Y2 et s'insérant dans la deuxième échancrure de premier côté 211a. La deuxième aile de premier côté 232a porte l'un des deuxièmes éléments latéraux d'emboitage élastique 237. La deuxième portion latérale de deuxième côté 231b présente une deuxième aile de deuxième côté 232b faisant saillie vers la deuxième plaque principale 212 suivant la deuxième direction transversale Y2 et s'insérant dans la deuxième échancrure de deuxième côté 211b. La deuxième portion latérale de deuxième côté 231b porte l'un des deuxièmes éléments latéraux d'emboitage élastique 237.

Le deuxième support principal 210, le deuxième support annexe 220 et le deuxième support secondaire 280 sont de préférence en matériau plastique.

La deuxième âme structurelle 240 s'étend suivant la deuxième direction d'élévation Z2 entre une deuxième extrémité structurelle supérieure 243 et une deuxième extrémité structurelle inférieure 244. La deuxième âme structurelle 240 est fixée à la deuxième armature 290 à la deuxième extrémité structurelle supérieure 243 et à la deuxième extrémité structurelle inférieure 244.

Dans le mode de réalisation illustré, la deuxième âme structurelle 240 comprend plus précisément un deuxième fil 242. Le deuxième fil 242 comporte une deuxième portion de fil de premier côté 242a, une deuxième portion de fil de deuxième côté 242b et une deuxième portion de fil inférieure 242c. La deuxième portion de fil de premier côté 242a et la deuxième portion de fil de deuxième côté 242b s'étendent sensiblement suivant la deuxième direction d'élévation Z2. La deuxième portion de fil inférieure 242c s'étend sensiblement suivant la deuxième direction transversale Y2. La deuxième portion de fil inférieure 242c s'étend à la deuxième extrémité structurelle inférieure 244. La deuxième portion de fil inférieure 242c s'étend entre la deuxième portion de fil de premier côté 242a et la deuxième portion de fil de deuxième côté 242b, de sorte que la deuxième portion de fil de premier côté 242a, la deuxième portion de fil inférieure 242c et la deuxième portion de fil de deuxième côté 242b forment trois parties successives du seul et unique deuxième fil 242 constituant la deuxième âme structurelle 240.

La deuxième portion de fil de premier côté 242a présente une deuxième portion supérieure de fixation de premier côté 245a. La deuxième portion supérieure de fixation de premier côté 245a est recourbée autour de la deuxième direction transversale Y2, la deuxième portion supérieure de fixation de premier côté 245a formant ainsi un crochet. Tel qu'illustré en particulier à la figure 9, la deuxième portion centrale 221 présente un deuxième alésage de premier côté 225a faisant saille sur au moins 3 centimètres par rapport à la deuxième face principale arrière 219. A la deuxième extrémité structurelle supérieure 243, la deuxième portion supérieure de fixation de premier côté 245a est rectiligne et reçue dans le deuxième alésage de premier côté 225a.

La deuxième portion de fil de deuxième côté 242b présente une deuxième portion supérieure de fixation de deuxième côté 245b. La deuxième portion supérieure de fixation de deuxième côté 245b est recourbée autour de la deuxième direction transversale Y2, la deuxième portion supérieure de fixation de deuxième côté 245a formant ainsi un crochet. Tel qu'illustré en particulier à la figure 9, la deuxième portion centrale 221 présente un deuxième alésage de deuxième côté 225b faisant saille sur au moins 3 centimètres par rapport à la deuxième face principale arrière 219. A la deuxième extrémité structurelle supérieure 243, la deuxième portion supérieure de fixation de deuxième côté 245a est rectiligne et reçue dans le deuxième alésage de deuxième côté 225b.

La deuxième portion supérieure de fixation de premier côté 245a et la deuxième portion supérieure de fixation de deuxième côté 245b sont recourbées autour de la deuxième direction transversale Y2 entre 120 degrés et 180 degrés, de préférence sur environ 150 degrés.

La deuxième extrémité structurelle supérieure 243 de la deuxième portion supérieure de fixation de premier côté 245a et le deuxième alésage de premier côté 225a entourant étroitement la deuxième extrémité structurelle supérieure 243 de la deuxième portion supérieure de fixation de deuxième côté 245a sont reçues dans un deuxième trou de fixation de premier côté 295a de la deuxième armature 290. La deuxième extrémité structurelle supérieure 243 de la deuxième portion supérieure de fixation de deuxième côté 245b et le deuxième alésage de deuxième côté 225b entourant étroitement la deuxième extrémité structurelle supérieure 243 de la deuxième portion supérieure de fixation de deuxième côté 245b sont reçues dans un deuxième trou de fixation de deuxième côté 295b de la deuxième armature 290.

La deuxième portion de fil de premier côté 242a présente une deuxième portion inférieure de fixation de premier côté 246a. La deuxième portion inférieure de fixation de premier côté 246a est recourbée autour de la deuxième direction transversale Y2 à la deuxième extrémité structurelle inférieure 244 entre 80 degrés et 100 degrés, dans le même sens que la deuxième portion supérieure de fixation de premier côté 245a et la deuxième portion supérieure de fixation de deuxième côté 245b. La deuxième portion de fil de deuxième côté 242b présente une deuxième portion inférieure de fixation de deuxième côté 246b. La deuxième portion inférieure de fixation de deuxième côté 246b est recourbée autour de la deuxième direction transversale Y2 à la deuxième extrémité structurelle inférieure 244 entre 80 degrés et 100 degrés, dans le même sens que la deuxième portion inférieure de fixation de premier côté 246a.

La deuxième portion de fil de premier côté 242a présente une deuxième portion de maintien de premier côté 248a entre la deuxième portion supérieure de fixation de premier côté 245a et la deuxième portion inférieure de fixation de premier côté 246a. La deuxième portion de fil de deuxième côté 242b présente une deuxième portion de maintien de deuxième côté 248b entre la deuxième portion supérieure de fixation de deuxième côté 245b et la deuxième portion inférieure de fixation de deuxième côté 246b.

Le deuxième support principal 210 est fixé directement sur la deuxième portion de maintien de premier côté 248a par les deuxièmes éléments principaux d'emboitage élastique 217 disposés le long du deuxième bord principal de premier côté 215a et sur la deuxième portion de maintien de deuxième côté 248b par les deuxièmes éléments principaux d'emboitage élastique 217 disposés le long du deuxième bord principal de deuxième côté 215b.

Le deuxième support annexe 220 est fixé directement sur la deuxième âme structurelle 240. Plus précisément, la deuxième portion centrale 221 est fixée sur la deuxième portion de maintien de premier côté 248a par l'intermédiaire des deuxièmes éléments centraux d'emboitage élastique 227 disposés à proximité de la deuxième frontière de premier côté 230a et sur la deuxième portion de maintien de deuxième côté 248b par l'intermédiaire des deuxièmes éléments centraux d'emboitage élastique 227 disposés à proximité de la deuxième frontière de deuxième côté 230b. La deuxième portion latérale de premier côté 231a est fixée sur la deuxième portion de maintien de premier côté 248a par l'intermédiaire de l'un des deuxièmes éléments d'emboitage élastique 237. La deuxième portion latérale de deuxième côté 231b est fixée sur la deuxième portion de maintien de deuxième côté 248b par l'intermédiaire de l'un des deuxièmes éléments d'emboitage élastique 237.

La deuxième portion de fil de premier côté 242a, en particulier la deuxième portion de maintien de premier côté 248a, est distante suivante la deuxième direction transversale Y2 d'une deuxième distance D2, de préférence comprise entre 20 centimètres et 50 centimètres, par rapport à la deuxième portion de fil de deuxième côté 242b, en particulier par rapport à la deuxième portion de maintien de deuxième côté 248b.

Le deuxième fil 242 présente une section transversale comprise de préférence entre 10 millimètres carrés et 100 millimètres carrés. Le deuxième fil 242 est de préférence en acier, usuellement qualifié d'acier à ressort.

Le deuxième support secondaire 280 comporte une deuxième plaque secondaire 282 et des deuxièmes éléments secondaires d'emboitage élastique 287 (ou deuxièmes clips secondaires). Les deuxièmes éléments secondaires d'emboitage élastique 287 sont obtenus de matière (lors de la même opération de moulage) avec la deuxième plaque secondaire 282. La deuxième plaque secondaire 282 présente une deuxième face secondaire avant 288 et une deuxième face secondaire arrière 289.

La deuxième plaque secondaire 282 est d'épaisseur constante et courbe. La deuxième plaque secondaire 282 s'étend suivant la deuxième direction d'élévation Z2 et la deuxième direction longitudinale X2 entre un deuxième bord secondaire supérieur 283 et un deuxième bord secondaire arrière 284. La deuxième plaque secondaire 282 s'étend suivant la deuxième direction transversale Y2 entre un deuxième bord secondaire de premier côté 285a et un deuxième bord secondaire de deuxième côté 285b. Le deuxième bord secondaire supérieure 283 et le deuxième bord secondaire arrière 284 s'étendent sensiblement suivant la deuxième direction transversale Y2. Le deuxième bord secondaire de premier côté 285a et le deuxième bord secondaire de deuxième côté 285b s'étendent depuis le deuxième bord secondaire supérieure 83 vers le deuxième bord secondaire arrière 284 suivant la deuxième direction d'élévation Z2, puis progressivement vers la deuxième direction longitudinale X2.

Le deuxième bord secondaire supérieur 283 est en regard du deuxième bord principal inférieur 214. La deuxième plaque secondaire 282 s'étend dans le prolongement de la deuxième plaque principale 212, la deuxième plaque principale 210 étant disposée entre la deuxième plaque secondaire 282 et la deuxième plaque annexe 222 suivant la deuxième direction d'élévation Z2.

La deuxième plaque secondaire 282 est incurvée, afin d'épouser la forme de la deuxième âme structurelle 240 à proximité de la deuxième extrémité structurelle inférieure 244. En particulier, la deuxième plaque secondaire 282 est au contact de la deuxième portion inférieure de fixation de premier côté 246a et de la deuxième portion inférieure de fixation de deuxième côté 246b.

Les deuxièmes éléments secondaires d'emboitage élastique 287 sont disposés sur la deuxième face secondaire arrière 289. Le deuxième support secondaire 280 est fixé directement sur la deuxième portion inférieure de fixation de premier côté 248a et sur la deuxième portion inférieure de fixation de deuxième côté 248b par les deuxièmes éléments secondaires d'emboitage élastique 287. Alternativement ou en complément des deuxièmes éléments secondaires d'emboitage élastiques 287 illustrés, le deuxième support secondaire 280 pourrait être fixé sur la deuxième portion de fil inférieure 242c par des éléments d'emboitage élastique analogues.

Tel qu'illustré en particulier à la figure 9, le deuxième support secondaire 280 intègre en outre des deuxièmes pattes élastiques de fixation 286 faisant saillie sur la deuxième face secondaire arrière 289 et coopérant avec la deuxième traverse inférieure 296 pour fixer de manière libérable la deuxième âme structurelle 240 sur la deuxième armature 290.

Pour réaliser le deuxième dossier 202, on réalise le deuxième support principal 210, le deuxième support annexe 220, la deuxième âme structurelle 240 et le deuxième support secondaire 280. Puis, on réalise le deuxième système de suspension 250 en fixant le deuxième support principal 210, le deuxième support annexe 220 et le deuxième support secondaire 280 sur la deuxième âme structurelle 240. Le deuxième système de suspension 250 forme alors un deuxième module dont tous les éléments sont maintenus les uns par rapport aux autres. Le deuxième système de suspension 250 peut alors être aisément transporté en un lieu où est fabriquée la deuxième armature 290.

La deuxième âme structurelle 240 et plus globalement le deuxième système de suspension est ensuite suspendu sur la deuxième armature 290 (en insérant la deuxième extrémité structurelle supérieure 243 dans le deuxième trou de fixation de premier côté 295a et le deuxième trou de fixation de deuxième côté 295b). Puis, la deuxième extrémité structurelle inférieure 244 est engagée sous la deuxième traverse inférieure 296 de la deuxième armature 290. Les deuxièmes pattes élastiques de fixation 286 se déforment, puis reviennent élastiquement pour former une butée fixant la deuxième extrémité structurelle inférieure 244 à la deuxième armature 290.

La deuxième matelassure est ensuite disposée sur la deuxième face principale avant 218, la deuxième face annexe avant 228 et la deuxième face secondaire avant 288. La deuxième matelassure est ensuite recouverte de la deuxième coiffe et la deuxième coiffe est maintenue sur la deuxième armature 290 par des techniques usuelles bien connues, ce qui maintient la deuxième matelassure 260 entre la deuxième coiffe 270 et le deuxième système de suspension 250.

En variante, comme il est également connu, la deuxième matelassure pourrait être réalisée en une seule partie par moussage sur le deuxième système de suspension ou alternativement en plusieurs parties moussées respectivement sur le deuxième support principal 210, le deuxième support annexe 220 et le deuxième support secondaire 280.

Le deuxième support principal 210 est géométriquement identique au premier support principal 110. Autrement dit, le premier support principal 110 et le deuxième support principal de 210 sont de préférence réalisés dans le même moule. En outre, le deuxième support principal 210 est de préférence réalisé dans le même matériau que le premier support principal 110, le premier support principal 110 et le deuxième support principal 210 étant techniquement indifférenciable. Un marquage concernant la date de fabrication ou autre différence non technique peut toutefois éventuellement différencier ces pièces.

La deuxième âme structurelle 240 est géométriquement et/ou techniquement identique à la première âme structurelle 140. Avantageusement, la première âme structurelle 140 et la deuxième âme structurelle 240 sont indifférenciées.

Même s'il peut apparaitre sur les figures quelques différences mineures de forme entre le deuxième support secondaire 280 et le premier support secondaire 180, de préférence le deuxième support secondaire est géométriquement et/ou techniquement identique au premier support secondaire 180. Avantageusement, le premier support secondaire 180 et le deuxième support secondaire 280 sont indifférenciés.

La deuxième armature 290 est géométriquement et/ou techniquement identique à la première armature 190. Avantageusement, la première armature 190 et la deuxième armature 290 sont indifférenciées.

Le deuxième bord inférieur de premier côté 234a fait partie de la deuxième aile de premier côté 231a et se situe dans l'échancrure de premier côté 211a. Le deuxième bord inférieur de deuxième côté 234b fait partie de la deuxième aile de deuxième côté 231b et se situe dans l'échancrure de deuxième côté 212a. Le premier bord inférieur de premier côté 134a et le premier bord inférieur de deuxième côté 134b se situent sensiblement au même niveau que le premier bord principal inférieur 114 suivant la première direction d'élévation Z1. Par conséquent, la deuxième hauteur H2 est inférieure à la première hauteur H1 entre 20 centimètres et 30 centimètres.

En variante, il pourrait être prévu un siège se différenciant du deuxième siège en ce que le deuxième bord inférieur de premier côté 234a et le deuxième bord inférieur de deuxième côté 234b se situeraient sensiblement au même niveau que le deuxième bord central inférieur 224.

Selon une autre variante, il pourrait être prévu un siège se différenciant du deuxième siège en ce que la deuxième plaque annexe 222 serait dépourvue de la deuxième portion latérale de premier côté 231a et de la deuxième portion latérale de deuxième côté 232a, de sorte que la deuxième plaque annexe 222 serait restreinte à la deuxième portion centrale 221.

Au besoin, il peut être prévu d'autres supports, par exemple fixés directement sur la deuxième armature 290 comme décrit dans le document FR 3 117 068 A1 et contribuant à supporter la deuxième matelassure 260 avec le deuxième support principal 210 et le deuxième support annexe 220 ou bien directement équipés d'une matelassure dédiée, comme décrit dans le document FR 3 117 068A1.

Bien entendu la divulgation n'est nullement limitée aux modes de réalisation décrits à titre illustratif, non limitatif. Ainsi, au besoin, d'autres fonctions de confort peuvent être associées au premier support principal 110 et au deuxième support principal 210, puisqu'ils présentent les conformations permettant de recevoir des éléments remplissant ces fonctions. Notamment un ou plusieurs haut-parleurs et/ou un ou plusieurs dispositifs vibrants (de l'anglais "exciter") et/ou un ou plusieurs fils résistifs de chauffage du dos de l'occupant peuvent être fixés sur le premier support principal 110 et le deuxième support principal 210. De préférence, le ou les haut-parleurs et/ou le ou les dispositif vibrants et/ou le ou les fils résistifs sont disposés entre d'une part le premier support principal 110 ou le deuxième support principal 210 et la première matelassure 160 ou la deuxième matelassure.

## Revendications

1. Ensemble pour un premier dossier (102) et un deuxième dossier (202) de siège (100, 200) de véhicule, l'ensemble comprenant un premier système de suspension (150) destiné à être fixé à une première armature (190) et un deuxième système de suspension (250) destiné à être fixé à une deuxième armature (290), dans lequel :
ledit premier système de suspension (150) comporte :
- un premier support principal (110), le premier support principal (110) présente une première plaque principale (112), ladite première plaque principale (112) s'étend suivant une première direction d'élévation (Z1) entre un premier bord principal supérieur (113) et un premier bord principal inférieur (114), ladite première plaque principale (110) s'étend suivant une première direction transversale (Y1) entre un premier bord principal de premier côté (115a) et un premier bord principal de deuxième côté (115b), la première direction transversale (Y1) est perpendiculaire à la première direction d'élévation (Z1),
- un premier support annexe (120), le premier support annexe (120) présente une première plaque annexe (122), ladite première plaque annexe présente une première portion centrale (121) s'étendant dans le prolongement de la première plaque principale (112) suivant la première direction d'élévation (Z1), ladite première portion centrale (121) s'étend suivant la première direction d'élévation (Z1) entre un premier bord central supérieur (123) et un premier bord central inférieur (124), le premier bord central inférieur (124) s'étend en regard du premier bord principal supérieur (113), et
- une première âme structurelle (140) s'étendant suivant la première direction d'élévation (Z1), le premier support principal (110) est fixé à la première âme structurelle (140) et le premier support annexe (120) est fixé à la première âme structurelle (140),
ledit deuxième système de suspension (250) comporte :
- un deuxième support principal (210), le deuxième support principal (210) présente une deuxième plaque principale (212), ladite deuxième plaque principale (212) s'étend suivant une deuxième direction d'élévation (Z2) entre un deuxième bord principal supérieur (213) et un deuxième bord principal inférieur (214), ladite deuxième plaque principale (212) s'étend suivant une deuxième direction transversale (Y2) entre un deuxième bord principal de premier côté (213) et un deuxième bord principal de deuxième côté (214), la deuxième direction transversale (Y2) est perpendiculaire à la deuxième direction d'élévation (Z2),
- un deuxième support annexe (220), le deuxième support annexe (220) présente une deuxième plaque annexe (222), ladite deuxième plaque annexe présente une deuxième portion centrale (221) s'étendant dans le prolongement de la deuxième plaque principale (212) suivant la deuxième direction d'élévation (Z2), ladite deuxième portion centrale (221) s'étend suivant la deuxième direction d'élévation (Z2) entre un deuxième bord central supérieur (213) et un deuxième bord central inférieur (214), le deuxième bord central inférieur (214) s'étend en regard du deuxième bord principal supérieur (213), et
- une deuxième âme structurelle (240) s'étendant suivant la deuxième direction d'élévation (Z2), le deuxième support principal (210) est fixé à la deuxième âme structurelle (240) et le deuxième support annexe (220) est fixé à la deuxième âme structurelle (240),
dans lequel ensemble :
- le deuxième support principal (210) est géométriquement identique au premier support principal (110), et
- le deuxième support annexe (220) diffère géométriquement du premier support annexe (120).

2. Ensemble selon la revendication 1 dans lequel le deuxième support principal (210) est techniquement identique au premier support principal (110).

3. Ensemble selon l'une quelconque des revendications précédentes dans lequel :
la première plaque annexe (122) présente en outre une première portion latérale de premier côté (131a),
la première portion latérale de premier côté (131a) s'étend suivant la première direction transversale (Y1) à partir de la première portion centrale (121) jusqu'à un premier bord externe de premier côté (136a), situé au-delà du premier bord principal de premier côté (115a).

4. Ensemble selon la revendication précédente dans lequel :
la première portion latérale de premier côté (131a) s'étend suivant la première direction d'élévation (Z1) jusqu'à un premier bord inférieur de premier côté (131a), le premier bord central inférieur (124) étant situé entre le premier bord central supérieur (123) et le premier bord inférieur de premier côté (134a) suivant la première direction d'élévation (Z1), et
la première portion latérale de premier côté (131a) présente un bord interne de premier côté (135a) s'étendant en regard du premier bord principal de premier côté (115a).

5. Ensemble selon la revendication précédente dans lequel :
le premier support annexe (120) s'étend suivant la première direction d'élévation (Z1) sur une première hauteur (H1) entre le premier bord central supérieur (123) et le premier bord inférieur de premier côté (134a),
le deuxième support annexe (220) s'étend suivant la deuxième direction d'élévation (Z2) sur une deuxième hauteur (H2) depuis le deuxième bord central supérieur (223), et
la première hauteur (H1) est supérieure à la deuxième hauteur (H2).

6. Ensemble selon la revendication précédente dans lequel la première hauteur (H1) est supérieure à la deuxième hauteur (H2) d'au moins 5 centimètres, de préférence d'au moins 10 centimètres.

7. Ensemble selon l'une quelconque des revendications précédentes dans lequel le premier système de suspension (150) présente un premier plan de symétrie (P1) s'étendant perpendiculairement à la première direction transversale (Y1).

8. Ensemble selon l'une quelconque des revendications précédentes dans lequel la deuxième âme structurelle (240) est géométriquement identique à la première âme structurelle (140).

9. Ensemble selon la revendication précédente dans lequel la deuxième âme structurelle (240) est techniquement identique à la première âme structurelle (140).

10. Ensemble selon l'une quelconque des revendications précédentes dans lequel :
l'ensemble comprend un premier dossier (102) et un deuxième dossier (202),
le premier dossier (102) comporte la première armature (190) et le premier système de suspension (150),
le deuxième dossier (202) comporte la deuxième armature (290) et le deuxième système de suspension (250),
la première âme structurelle (140) s'étend suivant la première direction d'élévation (Z1) entre une première extrémité structurelle supérieure (143) et une première extrémité structurelle inférieure (144), la première âme structurelle (140) est fixée à la première armature (190) à la première extrémité structurelle supérieure (143) et à la première extrémité structurelle inférieure (144), et
la deuxième âme structurelle (240) s'étend suivant la deuxième direction d'élévation (Z2) entre une deuxième extrémité structurelle supérieure (243) et une deuxième extrémité structurelle inférieure (244), la deuxième âme structurelle (240) est fixée à la deuxième armature (290) à la deuxième extrémité structurelle supérieure (243) et à la deuxième extrémité structurelle inférieure (244).
